# EUROPÄISCHE PATENTSCHRIFT

(11) **EP 0 856 954 B1**
(45) Veröffentlichungstag und Bekanntmachung des Hinweises auf die Patenterteilung: **26.04.2006**
(21) Anmeldenummer: 98100589.5
(22) Anmeldetag: 15.01.1998
(51) Int. Cl.: H04B 3/54

(54) **Synchronisationsverfahren zur Informationsübertragung über Stromversorgungsnetze**
Method of synchronizing for information transmission over power distribution networks
Procédé de synchronisation pour une transmission sur le réseaux d'alimentation électrique

(30) Priorität: 04.02.1997 DE 19704018
(43) Veröffentlichungstag der Anmeldung: 05.08.1998
(73) Patentinhaber: ABB PATENT GmbH, 68526 Ladenburg (DE)
(72) Erfinder: Götte, Karsten, Dipl.-Ing., 58511 Lüdenscheid (DE)
(74) Vertreter: Miller, Toivo

(56) Entgegenhaltungen:
- EP-A- 0 200 016
- EP-A- 0 365 350
- US-A- 4 340 880
- US-A- 4 400 688

## Beschreibung

Die Erfindung bezieht sich auf ein Verfahren zur Synchronisation von Sender und Empfänger bei einer Datenübertragung mit phasenkontinuierlicher Signalsynthese (CPFSK) und einer Übertragung von Datentelegrammen über ein Stromversorgungsnetz gemäß dem Oberbegriff des Anspruches 1.

Ein solches Verfahren ist beispielsweise in der EP B1 0 200 016 beschrieben. Es basiert auf der Nutzung der Netzfrequenz als Referenzsignal zur Synchronisierung einer FSK-Übertragung. Dabei benötigen korrelativ auswertende Empfänger das Referenzsignal zur Bestimmung der Bitbreite synchron zum Sender.

Die Netzfrequenz, sie beträgt im europäischen Verbundnetz 50 Hz +/- 1 %, bietet sich als Synchronsignal an, weil sie relativ stabil ist und weil der Nulldurchgang des Spannungssignals in allen Punkten des Verbundnetzes bis auf 1 % symmetrisch ist. Ausgehend von der Netzfrequenz sind alle Baudraten, die ein Vielfaches der Netzfrequenz betragen, prinzipiell synchronisationsfähig.

Die Nutzung der Netzfrequenz als Referenzsignal erfolgt üblicherweise durch Aufbereitung zu Rechtecksignalen mittels Schmidttrigger und Generierung der Baudrate mittels Teiler. Nach dem Telegrammstart wird die Baudrate konstant gehalten. In den korrelativ auswertenden Empfängern werden in bekannter Weise die Integratoren des Korrelators synchron zur Bitbreite von einem Baudratengenerator reinitialisiert. Zum Ende einer Bitdauer wird jeweils anhand der Integratorstände eine Bitentscheidung getroffen, so daß ein Bitstrom für eine Auswertung zur Verfügung steht. Aus dem ständigen Bitstrom wird durch Detektion einer Präambel ein Telegrammstart herausgefiltert und anschließend ein so erkanntes Datentelegramm decodiert.

Das bekannte Verfahren arbeitet zufriedenstellend, wenn relativ kurze Datentelegramme zu übertragen sind. Bei längeren Datentelegrammen kann eine Netzfrequenzänderung während der Telegrammübertragung zu einem Synchronisierungsfehler führen, der eine Telegrammauswertung unmöglich macht. Da der Empfänger seine Baudrate fortlaufend aus der aktuellen Netzfrequenz ableitet, der Sender jedoch mit Sendebeginn die Baudrate konstant hält, kann mit zunehmender Telegrammlänge die Synchronizität verlorengehen.

Der Erfindung liegt daher die Aufgabe zugrunde, das Synchronisationsverfahren gemäß dem Oberbegriff des Anspruches 1 so weiter zu entwickeln, daß unabhängig von der Telegrammlänge auch bei schwankender Netzfrequenz eine sichere Übertragung erreicht wird.

Diese Aufgabe wird bei einem Synchronisationsverfahren nach dem Oberbegriff des Anspruches 1 durch dessen kennzeichnende Merkmale gelöst. Vorteilhafte Ausgestaltungen sind in weiteren Ansprüchen angegeben.

Vorteile der Erfindung bestehen darin, daß einerseits die Vorteile einer Synchronisation mit der Netzfrequenz als Referenzsignal nutzbar sind und andererseits durch den empfangsseitigen Wechsel der Baudrate von einer aus der aktuellen Netzfrequenz abgeleiteten Baudrate auf eine festgelegte Baudrate, sobald die Präambel des Datentelegramms erkannt ist, eine verbesserte Synchronisation erreicht wird. Durch außerdem anwendbare Korrekturverfahren läßt sich die Synchronisation noch weiter verbessern.

Die Erfindung wird nachstehend anhand von Ausführungsbeispielen, die in Zeichnungsfiguren dargestellt sind, näher erläutert.

Es zeigen
- Fig. 1: eine Anordnung zur Durchführung des erfindungsgemäßen Verfahrens,
- Fig. 2: einen sendeseitigen Trainings- und Präambel-Bitstrom bei 50Hz Netzfrequenz,
- Fig. 3: den entsprechenden empfangsseitigen Bitstrom,
- Fig. 4: eine tabellarische Darstellung der gesamten Präambel im 50Hz-Fall,
- Fig. 5: einen sendeseitigen Trainings- und Präambel-Bitstrom bei 48Hz Netzfrequenz,
- Fig. 6: den zugehörigen empfangsseitigen Bitstrom,
- Fig. 7: die tabellarische Darstellung im 48Hz-Fall,
- Fig. 8: einen sendeseitigen Bitstrom zur Erläuterung der Feinsynchronisation, und
- Fig. 9: den zugehörigen empfangsseitigen Bitstrom.

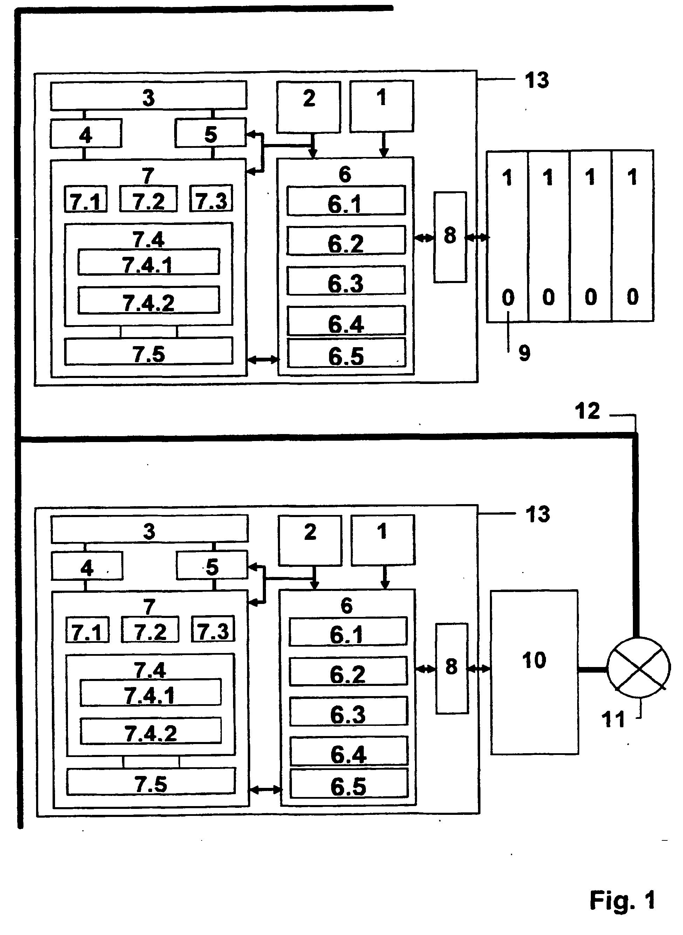

Fig. 1 zeigt eine Anordnung zur Durchführung des erfindungsgemäßen Verfahrens im Rahmen einer typischen Anwendung.

Über Leitungen 12 eines Niederspannungsnetzes, z. B. eines 230V-50 Hz-Netzes, sind Busteilnehmer 13 miteinander verbunden, wobei die Leitungen 12 nicht nur zur Stromversorgung, sondern auch zur Informationsübertragung genutzt sind. Ein solches System ist z.B. als Busch-Powernet EIB in der Druckschrift "BJE 00 1-0-07750, April 1996 der Firma Busch-Jaeger Elektro GmbH, Lüdenscheid, beschrieben.

An die Busteilnehmer 13 sind jeweils über eine Anwenderschnittstelle 8 unterschiedliche Ein-/Ausgabegeräte anschließbar. Im dargestellten Beispiel ist an einen ersten Busteilnehmer 13 ein Vierfachtastsensor 9 und an einen anderen Busteilnehmer 13 ein Dimmaktor 10 angeschlossen, der eine Lampe 11 ansteuert.

Ein Busteilnehmer 13 enthält jeweils neben einem Netzteil 2 die erforderlichen Einrichtungen zur Erfüllung der Funktionen eines Busankoppiers, sowie eines Applikationsprozessors.

Die Funktionen des Applikationsprozessors sind im dargestellten Beispiel durch einen Mikroprozessor 6 realisiert, dessen Software nach dem OSI-Schichtenmodell (Standard EN 7498) organisiert ist und der ein Anwenderprogramm 6.1 enthält zur Auswertung der Tastenstellungen des Tastsensors 9. Die erfaßten Tastenstellungen werden vom Anwenderprogramm 6.1 über eine Anwendungsschicht 6.2, eine Transportschicht 6.3 und eine Sicherungsschicht 6.4 in die Bitübertragungsschicht 6.5 transferiert.

In der Bitübertragungsschicht 6.5 wird ein zu sendendes Datentelegramm gebildet. Das Datentelegramm enthält beispielsweise eine vorangestellte 4-Bit-Trainingssequenz, eine 16-Bit-Präambel und einen Nachrichtenteil. Die Trainingssequenz ermöglicht im System genutzten Filtern ein Einschwingen und die Präambel kann z.B. Informationen über die Struktur des Nachrichtenteils enthalten. Der Nachrichtenteil enthält Informationen über die erfaßten Tastenstellungen. Die Bitübertragungsschicht 6.5 berechnet den Beginn des ersten Bits des Datentelegramms im Fall einer Sendeanforderung. Diese kann beispielsweise durch das Anwenderprogramm 6.1 im Mikroprozessor 6 bei einer Änderung der Tastenstellungen oder durch eine zyklische Abfrage im Bussystem ausgelöst werden. Die Berechnung des Sendebeginns erfolgt auf der Grundlage der aufbereiteten aktuellen Netzfrequenz und einer gewählten und festgelegten Nennbaudrate.

Eine dazu benötigte Aufbereitung der Netzfrequenz erfolgt durch Bildung eines netzfrequenten Rechtecksignals in einer Netzsynchronisationseinrichtung 1. Die für die Sendung eines Datentelegramms benutzte Nennbaudrate ist ein Vielfaches der Nenn-Netzfrequenz, ist aber unabhängig von der aktuellen Netzfrequenz.

Die Funktionen eines Busankopplers sind im Busteilnehmer 13 durch einen anwenderspezifischen digitalen Signalprozessor (DSP) 7 in Verbindung mit einem Sendefilter 5, einem Empfangsfilter 4 und einer HF-Netzeinkopplung 3 realisiert. Der DSP 7 enthält unter anderem D/A-Umsetzer 7.1, A/D-Umsetzer 7.3, ROM-Speicher 7.2, Korrelatoren 7.4 mit zugeordnetem Integrator und mit High-Registern 7.4.1 und Low-Registern 7.4.2 sowie eine Steuereinheit (Control Unit) 7.5.

### Zur Arbeitsweise im Sendebetrieb:

Ein in der Bitübertragungsschicht 6.5 des Mikroprozessors 6 - wie oben beschrieben - gebildetes Datentelegramm wird an den DSP 7 geleitet. Die Steuereinheit 7.5 schaltet den DSP 7 vom Empfangs- in den Sendemodus und veranlaßt die Sendung des Datentelegramms. Der DSP 7 liest entsprechend dem jeweiligen Bit die digitalisierten Werte der "1" oder "0"-Freqenz aus dem ROM 7.2 aus und gibt diese Werte an den D/A-Umsetzer 7.1 weiter. Die resultierende analoge Spannung wird von einer nicht dargestellten Sendestufe klirrarm verstärkt und über die HF-Netzeinkopplung 3 niederohmig auf das Stromversorgungsnetz 12 geprägt. Als "1"-Frequenz ist im hier beschriebenen Beispiel die Frequenz 115,2 kHz gewählt und als "0"-Frequenz 105,6 kHz. Während des Sendevorgangs läuft der DSP 7 unabhängig von der aktuellen Netzfrequenz mit der spezifizierten Baudrate, z. B. 1200 Baud und sendet mit einer Bitbreite von 833 Mikrosekunden. Der DSP 7 schaltet die zu sendenden Frequenzen ohne Phasensprung, als nur bei einem Phasenwinkel von 180° oder 360° um, wodurch Phasenkontinuität gewährleistet ist.

### Zur Arbeitsweise im Empfangsbetrieb:

Das gesandte Datentelegramm wird von allen an die Leitungen 12 des gleichen Stromversorgungsnetzes angeschlossenen Busteilnehmern 13 empfangen. Diese koppeln das HF-Signal über die HF-Netzeinkopplung 3 aus. Mit dem Empfangsfilter 4 wird jeweils das interessante Frequenzband ausgefiltert und verstärkt.

Das so aufbereitete Signal steht am Eingang des DSP 7 an und wird vom A/D-Umsetzer 7.3 digitalisiert. Die digitalisierten Werte werden im zugeordneten Integrator mittels einer Faltungsfunktion mit den im ROM 7.1 abgelegten digitalisierten Werten der "1"- und "O"-Frequenzen bezüglich ihrer Ähnlichkeit verglichen. Je nach Ergebnis dieses Vergleichs werden die Werte in dem High-Registern 7.4.1 oder den Low-Registern 7.4.2 des Korrelators 7.4 abgelegt.

Die Bitübertragungsschicht 6.5 des empfangenden Busankopplers eines Busteilnehmers 13 berechnet kontinuierlich aus der aufbereiteten Netzfrequenz und der eingestellten Baudrate den Bitbeginn synchron zum Sender. Zu jedem Bitstart werden die Integratoren des Korrelators 7.4 gelöscht und es werden die Inhalte der Register 7.4.1 bzw. 7.4.2 ausgelesen. Der so empfangene Bitstrom wird kontinuierlich auf Kongruenz mit der Präambel oder einem Teil der Präambel geprüft.

Wird eine Präambel oder ein Teil davon gefunden, so wird aus der Relation der Korrelatorergebnisse für die "1"- und die "0"-Frequenz ein optimaler zeitlicher Synchronpunkt ermittelt und der Bitstart für die nachfolgenden Bits auf diesen Zeitpunkt eingestellt. Erfindungswesentlich ist, daß zur weiteren Prüfung des empfangenen Bitstroms die Bitbreite, auch als Bitdauer bezeichnet, fest auf die Nennbitbreite der sendeseitig eingestellten Baudrate gesetzt wird. Damit wird für die Erfassung des restlichen Telegramms Unabhängigkeit von der tatsächlichen Netzfrequenz erreicht. Das Telegramm wird eingelesen und den oberen Schichten 6.1 bis 6.4 zur Bearbeitung übergeben.

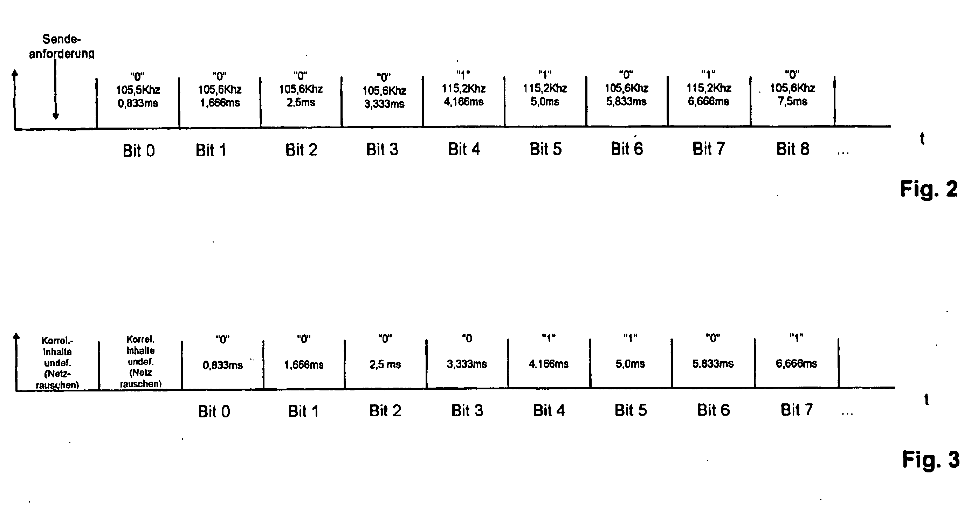

Die Figuren 2 bis 7 zeigen beispielhaft Bitströme, mit deren Hilfe das Verfahren weiter verdeutlicht wird. Die Beispiele beziehen sich auf eine 16-Bit lange Präambel mit vorangestellten 4-Trainingsbit, so daß insgesamt 20 Bits gesendet werden bevor der Nachrichtenteil beginnt.

Figur 2 zeigt den sendeseitigen Bitstrom für den Fall einer Nenn-Netzfrequenz von 50Hz und einer Baudrate von 1200 Baud. Die Dauer einer 50Hz-Vollwelle beträgt 20ms und die Dauer pro Bit berechnet sich somit zu 20ms/(1/50*1200)=0,833ms. Dargestellt sind die vier Bits (Bit 0 bis Bit 3) der Trainingssequenz und ein Teil der Präambel (Bit 4 bis Bit 8). Es ist zu jedem Bit die am Bitende vergangene Dauer seit Sendebeginn angegeben.

Unabhängig von der aktuellen gemessenen Netzfrequenz sendet der Sender immer mit der aus der 50Hz Nennfrequenz abgeleiteten Bitdauer von 0,833ms. Der Sendebeginn des ersten Bits (BitO) - nach Vorliegen einer Sendeanforderung - wird jedoch mit dem Nulldurchgang der Netzspannung synchronisiert.

Figur 3 zeigt den empfangsseitig erfaßten Bitstrom für den Fall, daß die gemessene Netzfrequenz exakt die Nenn-Netzfrequenz 50Hz ist. Das Timing der Empfangsbits stimmt exakt mit dem der Sendebits überein.

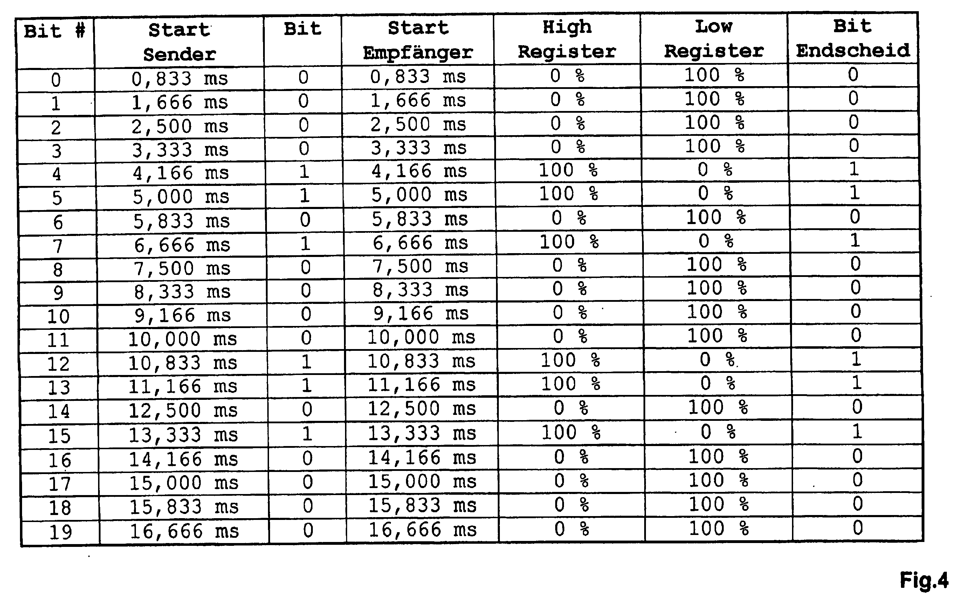

Figur 4 zeigt in einer tabellarischen Darstellung das Timing der gesamten Präambelübertragung einschließlich Trainingssequenz für den in den Figuren 2 und 3 unterstellten Fall einer gemessenen Frequenz von 50Hz. Die erste Spalte zeigt die Bit-Nummern 0 bis 19, die zweite Spalte die sendeseitigen Bitende-Zeiten, die dritte Spalte den gesendeten Bitwert 0 oder 1, die vierte Spalte die empfangsseitigen Bitende-Zeiten, die fünfte Spalte den jeweiligen Inhalt des High-Registers 7.4.1, die sechste Spalte zeigt den jeweiligen Inhalt des Low-Registers 7.4.2 und die siebte Spalte den aufgrund der Registerinhalte getroffenen Bitentscheid. Im Fall der tatsächlichen 50Hz-Frequenz stimmt das Sende- und Empfangs-Timing völlig überein, so daß die Präambel sicher erkannt wird.

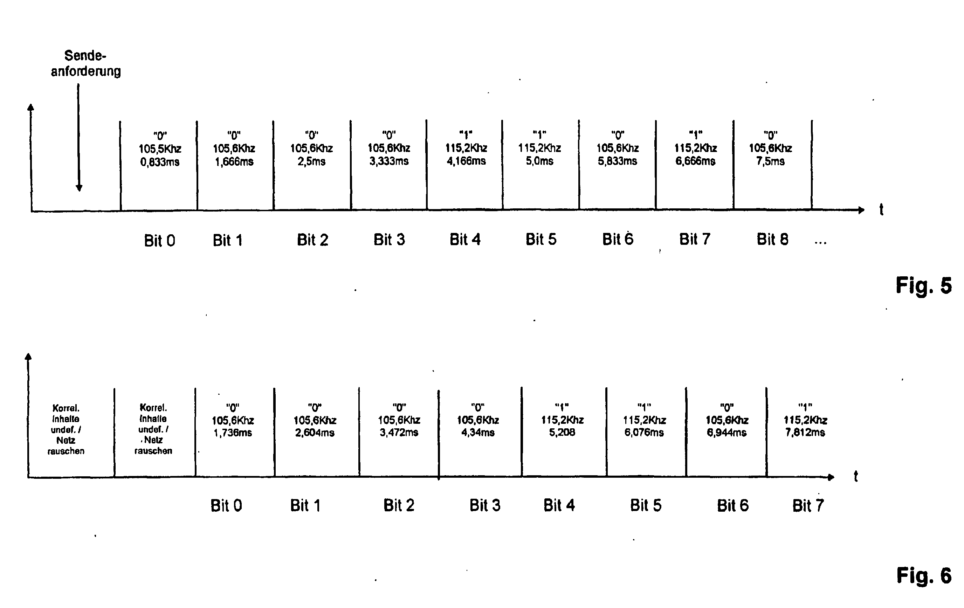

Figur 5 zeigt einen sendeseitigen Bitstrom, der im Fall einer gemessenen 48Hz-Netzfrequenz gesendet wird. Er unterscheidet sich nicht von dem in Figur 2 gezeigten Bitstrom, da mit der festeingestellten Bitdauer gesendet wird.

Der in Figur 6 gezeigte empfangsseitige Bitstrom bei einer Netzfrequenz von 48Hz unterscheidet sich jedoch im Timing vom sendeseitigen Bitstrom, da der Empfänger die Bitdauer zunächst aus der gemessenen Netzfrequenz ableitet. Die zur Erfassung der Präambel benutzte Bitdauer errechnet sich bei der 48Hz-Vollwellendauer von 20,0833ms zu 20,0833ms/(1/50*1200)=0,868 ms.

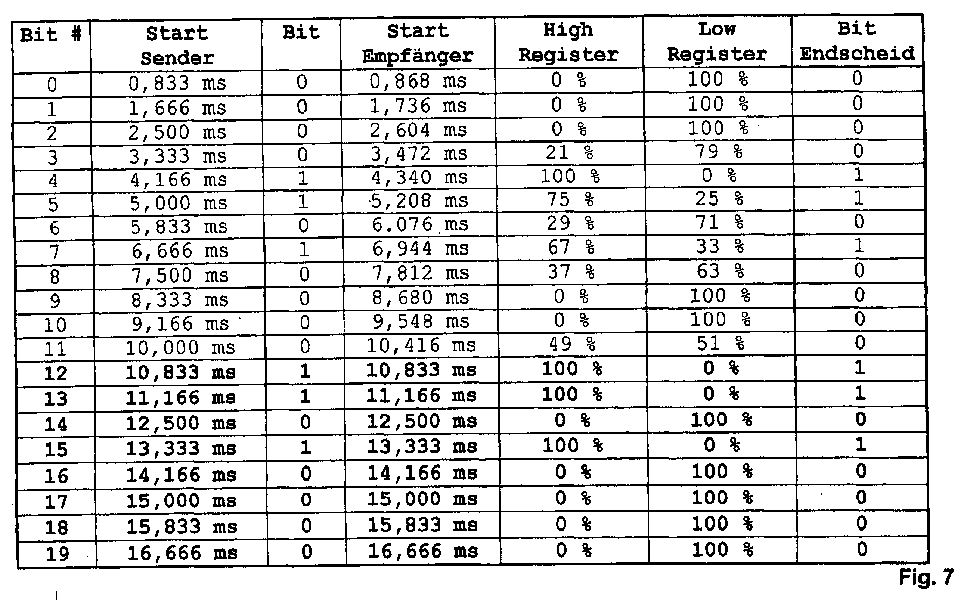

Figur 7 zeigt entsprechend der Figur 4 das Timing der Präambeltransmission. In der tabellarischen Darstellung der Figur 7 ist angenommen, daß der Empfänger den bis Bit 11 übertragenen Teil der Präambel als Präambelteil erkannt hat und dann verfahrensgemäß auf die festeingestellte Bitdauer von 0,833 ms umgeschaltet hat. Würde der Empfänger den Präambelteil nicht spätestens bis Bit 11 erkennen, wäre das Telegramm verloren, da mit zunehmender Telegrammlänge der Versatz zwischen Sende- und Empfangsbit proportional zur Abweichung der tatsächlichen Netzfrequenz von der Nenn-Netzfrequenz ansteigt und die Bitentscheidung fehlerhaft wird. Der bis zum Ende von Bit 11 eingetretene zeitliche Versatz wird durch ein kürzeres Empfängerbit 12 korrigiert, so daß das Timing der weiteren Bits wieder stimmt.

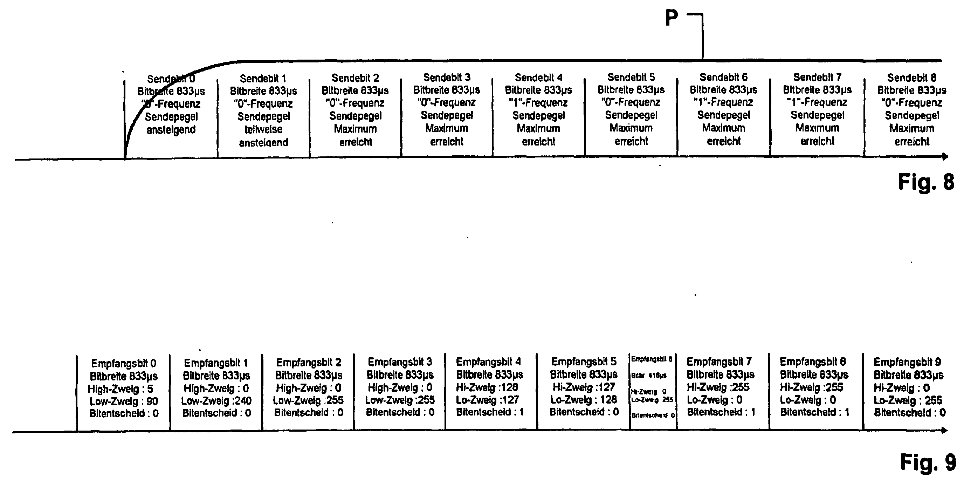

Anhand der Figuren 8 und 9 wird weiter unten eine als Feinsynchronisation bezeichnete Abwandlung des erfindungsgemäßen Verfahrens beschrieben. Die Abwandlung bezieht sich auf die Erkennung eines Präambelteils und Korrekturmaßnahmen, um dann ebenfalls mit der festeingestellten Bitbreite und synchron zum Sender die weiteren Präambel- und Nachrichten-Bits eines Telegramms zu empfangen.

Die Feinsynchronisation kann alternativ zu oben beschriebenen Präambelerkennung, jedoch bevorzugt in Kombination dazu, also konkurrierend eingesetzt werden.

Die Anwendung der Feinsynchronisation kann insbesondere dann zu einer sicheren Synchronisation führen, wenn die Synchronisation des Sendestarts mit dem Nulldurchgang der Netzspannung nicht gewährleistet ist. Eine solche Situation kann z.B. in stark gestörten dreiphasigen Netzen gegeben sein, beispielsweise verursacht durch Rundsteuersignale mit hoher Amplitude, Frequenzumrichter oder im Fall von Notstromversorgungen, die nicht am europäischen Verbundnetz angeschlossen sind. Also immer, wenn die Stabilität der Netzfrequenz nicht gewährleistet ist, sei es weil die Netzfrequenz stark von der Nennfrequenz abweicht oder weil große Frequenzsprünge auftreten.

Die nachstehend anhand der Figuren 8 und 9 beschriebene Feinsynchronisation ermöglicht zwar eine Übertragung ohne sendeseitige Synchronisation des Sendestarts mit dem Spannungsnulldurchgang, setzt aber voraus, daß sich der Pegel des Empfangssignals auswertbar vom Netzrauschen hervorhebt.

Figur 8 zeigt - ähnlich wie die Figuren 2 und 5 - einen sendeseitigen Bitstrom, wobei wiederum die Trainingssequenz und fünf Bits der Präambel dargestellt sind. Die Bitbreite beträgt wie zuvor 0,833ms. Im Unterschied zu Figur 2 oder 5 erfolgt der Start des Bits 0 mit der Einschaltung des Senders, ohne Nulldurchgangs-Synchronisation. In Figur 8 ist der Verlauf des Sendepegels P beispielhaft eingeblendet. Der volle Sendepegel wird in der Regel und auch im dargestellten Beispiel mit dem zweiten Bit erreicht.

Figur 9 zeigt den empfangsseitigen Bitstrom, wobei der ungünstigste Fall dargestellt ist, nämlich ein sich zufällig ergebender zeitlicher Versatz gegenüber den Sendebits um ein halbes Bit.

Die Empfangsbits sind - unabhängig von der tatsächlichen Netzfrequenz - durchgängig auf die auch sendeseitig festgelegte Bitbreite, hier 0,833ms, festgelegt, mit Ausnahme einer Synchronisationsmaßnahme, die durchgeführt wird, sobald ein Teil der Präambel erkannt ist.

Die in den Registern 7.4.1 bzw. 7.4.2 erfaßten Werte werden vom DSP 7 ausgelesen und ausgewertet. Die Werte repräsentieren den Pegel, mit dem jede Frequenz empfangen wird. Es läßt sich ein bestimmter Pegelwert für die "0"-Frequenz festlegen, der überschritten sein muß, damit Sendebetrieb eines Busteilnehmers unterstellt wird. Außerdem läßt sich z.B. festlegen, daß mindestens drei aufeinanderfolgende Bits die "0"-Frequenz mit hohem Pegel empfangen müssen, damit ein Empfang der Trainingsfrequenz unterstellt wird. Wenn anschließend ein 1-Bit folgt, wie z.B. in Figur 9 das Empfangsbit 4, so wird dieses als Präambelanfang interpretiert, so daß eine Feinsynchronisation durchgeführt werden kann. Dies erfolgt im dargestellten Beispiel durch Quasi-Verlängerung des folgenden Bits (Bit 5) durch Einfügung eines Korrekturbits, hier des Bits 6, das nur die halbe Standard-Bitbreite aufweist. Die folgenden Empfangsbits sind dann völlig synchron mit den Sendebits.

Die Synchronisation läßt sich unter Verwendung des zweiten Teils der Präambel (vgl. Bitfolge in Figur 4), der die gleiche Bitfolge wie der erste Teil enthält, überprüfen und bei Bedarf korrigieren, wobei der vorbeschriebene Algorithmus nochmals angewendet wird:

### Bezugszeichenliste

- 1: Netzsynchronisationseinrichtung
- 2: Netzteil
- 3: HF-Netzeinkopplung
- 4: Empfangsfilter
- 5: Sendefilter
- 6: Mikroprozessor
- 6.1: Anwenderprogramm
- 6.2: Anwendungsschicht
- 6.3: Transportschicht
- 6.4: Sicherungsschicht
- 6.5: Bitübertragungsschicht
- 7: Digitaler Signalprozessor (DSP)
- 7.1: D/A-Umsetzer
- 7.2: ROM
- 7.3: A/D-Umsetzer
- 7.4: Korrelator
- 7.4.1: High-Register
- 7.4.2: Low-Register
- 7.5: Control Unit
- 8: Anwenderschnittstelle (AST)
- 9: Tastsensor
- 10: Dimmaktor
- 11: Lampe
- 12: Leitungen eines Niederspannungsnetzes
- 13: Busteilnehmer

## Patentansprüche

1. Verfahren zur Synchronisation von Sender und Empfänger bei einer Datenübertragung mittels phasenkontinuierlicher Signalsynthese und Übertragung von Datentelegrammen über ein Stromversorgungsnetz, wobei
a) die Netzfrequenz und Netzspannungs-Nulldurchgänge meßtechnisch erfaßt und zur Synchronisation benutzt werden,
b) zur Übertragung der 1- und 0-Bits der Datentelegramme unterschiedliche Hochfrequenzen verwendet werden,
c) zur Übertragung eine Baudrate verwendet wird, die ein Vielfaches der Netzfrequenz ist, und
d) die Datentelegramme jeweils zumindest eine Präambel und einen Nachrichtenteil aufweisen,
**dadurch gekennzeichnet, daß**
e) sendeseitig die gemessene Netzfrequenz und die Spannungs-Nulldurchgänge lediglich zur Berechnung des Sendebeginns für das erste Datentelegramm-Bit verwendet werden,
f) für alle Sendebits eine einheitliche, von der Nenn-Netzfrequenz abgeleitete Bitbreite benutzt wird,
g) empfangsseitig nur so lange die Empfangsbitbreite aus der gemessenen Netzfrequenz abgeleitet wird, bis die Präambel oder ein Teil der Präambel erkannt ist, und
h) anschließend eine Umschaltung auf die feste, auch vom Sender benutzte Bitbreite durchgeführt wird, und ein gegebenenfalls eingetretener zeitlicher Versatz zwischen Sende- und Empfangsbits beseitigt wird.

2. Verfahren nach Anspruch 1, **dadurch gekennzeichnet, daß** in den Datentelegrammen jeweils der Präambel eine Bitfolge als Trainingssequenz vorangestellt wird.

3. Verfahren nach Anspruch 1 oder 2, **dadurch gekennzeichnet, daß** empfangsseitig die Umschaltung auf die feste Bitbreite und Versatzbeseitigung zu einem optimalen zeitlichen Synchronpunkt erfolgt, der aus der Relation von Korrelatorergebnissen für die "1"- und "0"-Frequenz bei der Erfassung der Trainings- und Präambel-Bits berechnet wird.

4. Verfahren nach einem der vorstehenden Ansprüche, **dadurch gekennzeichnet, daß** empfangsseitig während des Empfangs der Präambel, konkurrierend oder ergänzend eine Feinsynchronisation mittels folgender Maßnahmen durchgeführt wird:
a) es werden dauerhaft Empfangsbits mit der auch vom Sender benutzten festen Bitbreite benutzt, wobei zunächst keine Synchronizität besteht,
b) während einer Bitbreite erfaßte Werte für empfangene "0"- bzw. "1"-Frequenzen werden ausgewertet,
c) sobald durch diese Auswertung die Präambel oder ein Teil davon erkannt wird, und auch der Versatz errechnet wird, erfolgt eine Verlängerung des nächsten Bits oder Einfügung eines kurzen Bits, um vollständige Synchronisation herzustellen für die Auswertung der weiteren Telegrammbits.

5. Verfahren nach Anspruch 4, **dadurch gekennzeichnet, daß** die Feinsynchronisation während eines Präambelempfangs wiederholt durchgeführt wird zur Überprüfung und gegebenenfalls Korrektur der Synchronisation.

## Claims

1. A method for synchronizing transmitter and receiver in a data transmission by means of phase-continuous signal synthesis and transmission of data telegrams via a power supply network, with
a) the system frequency and system-voltage zero crossings being detected by metrology and being used for synchronization;
b) different high frequencies are used for transmitting the 1 and 0 of the data telegrams;
c) a baud rate is used for the transmission which is a multiple of the system frequency;
d) the data telegrams each comprise at least one preamble and a message section;
**characterized in that**
e) on the transmission side the measured system frequency and the voltage zero crossings are merely used for calculating the start of the transmission for the first data telegram bit;
f) a uniform bit width is used for all send bits which is derived from the nominal system frequency;
g) on the receiving side the receive bit width is derived from the measured system frequency until the preamble or a part of the preamble is recognized, and
h) thereafter a changeover to a fixed bit width is performed which is also used by the transmitter, and an optionally occurring time displacement between send and receive bit is eliminated.

2. A method according to claim 1, **characterized in that** in the data telegrams a bit sequence is preceded to each preamble as a training sequence.

3. A method according to claim 1 or 2, **characterized in that** on the receiving side the changeover to a fixed bit width and the elimination of the time displacement occurs at an optimal time synchronization point which is calculated from the relation of correlator results for the "1" and "0" frequency in the detection of the training and preamble bits.

4. A method according to one of the preceding claims, **characterized in that** on the receiving side a fine synchronization is performed by means of the following measures during the receipt of the preamble, either in a competitive or supplementary manner:
a) receive bits are used permanently with the fixed bit width also used by the transmitter, with there not being any synchronicity at first;
b) values received during a bit width for received "0" and "1" frequencies are evaluated;
c) as soon as the preamble or a part thereof is recognized by this evaluation and the displacement is also calculated, an extension of the next or an insertion of a short bit occurs in order to bring about complete synchronization for the evaluation of the further telegram bit.

5. A method according to claim 4, **characterized in that** the fine synchronization is performed repeatedly during the reception of a preamble in order to verify and optionally correct the synchronization.

## Revendications

1. Procédé de synchronisation de l'émetteur et du récepteur lors d'une transmission de données au moyen d'une synthèse de signaux à phase continue et d'une transmission de télégrammes de données sur le réseau d'alimentation électrique, dans lequel
a) la fréquence du réseau et les passages au point zéro de la tension du réseau sont détectés par une technique de mesure et sont utilisés à des fins de synchronisation,
b) différentes hautes fréquences sont utilisées pour la transmission des bits 1 et 0 des télégrammes de données,
c) un débit en bauds qui est un multiple de la fréquence du réseau est utilisé pour la transmission, et
d) les télégrammes de données comprennent chaque fois au moins un préambule et une partie informations,
**caractérisé en ce que**
e) du côté émission, la fréquence du réseau mesurée et les passages au point zéro de la tension sont utilisés uniquement pour calculer le début de l'émission pour le premier bit du télégramme de données,
f) une largeur de bit uniforme, dérivée de la fréquence nominale du réseau, est utilisée pour tous les bits d'émission,
g) du côté réception, la largeur de bit de réception n'est déduite de la fréquence du réseau mesurée que jusqu'au moment où le préambule ou une partie du préambule est reconnue, et
f) enfin, un passage à la largeur de bit fixe, également utilisée par l'émetteur, est exécuté et un éventuel décalage dans le temps entre bits d'émission et dé réception est éliminé.

2. Procédé selon la revendication 1, **caractérisé en ce qu'**une suite de bits servant de séquence d'entraînement précède chaque fois le préambule dans les télégrammes de données.

3. Procédé selon la revendication 1 ou 2, **caractérisé en ce que** du côté réception, le passage à la largeur de bit fixe et l'élimination du décalage ont lieu à un point de synchronisation optimal dans le temps qui est calculé à partir de la relation des résultats des corrélateurs pour la fréquence « 1 » et « 0 » lors de la détection des bits d'entraînement et du préambule.

4. Procédé selon une des revendications précédentes, **caractérisé en ce que** du côté réception, pendant la réception du préambule, une synchronisation précise est effectuée de manière concourante ou complémentaire au moyen des mesures suivantes :
a) des bits de réception sont utilisés en permanence avec la largeur de bit fixe également utilisée par l'émetteur, aucune synchronicité n'existant dans un premier temps,
b) des valeurs déterminées pendant une largeur de bit pour les fréquences « 0 » ou « 1 » reçues sont évaluées,
c) dès que le préambule ou une partie de celui-ci est reconnue grâce à cette évaluation et que le décalage est calculé, un prolongement du bit suivant ou l'insertion d'un bit court a lieu pour produire une totale synchronisation pour l'évaluation des autres bits du télégramme.

5. Procédé selon la revendication 4, **caractérisé en ce que** la synchronisation précise est effectuée de manière répétée pendant une réception du préambule à des fins de vérification et, le cas échéant, de correction de la synchronisation.
